# EUROPEAN PATENT APPLICATION

(11) **EP 2 431 900 A1**
(43) Date of publication of application: **21.03.2012**
(21) Application number: 11181402.6
(22) Date of filing: 15.09.2011
(51) Int. Cl.: G06F 21/00, G06F 17/30

(54) **Audiovisual content tagging using biometric sensor**

(30) Priority: 15.09.2010 US 882279
(71) Applicant: Sony Ericsson Mobile Communications AB, 221 88 Lund (SE)
(72) Inventor: Agevik, Markus, SE-212 30 Malmö (SE)
(74) Representative: VALEA AB

(57) **Abstract**

A system and method for tagging audiovisual content based on biometric data of a user of an electronic device. One or more sensors are included in a headset worn by a user during reproduction of audiovisual content. The sensors output biometric data based on physical movement of a user in response to the audiovisual content. A biometric measuring function monitors, measures, records and/or forwards the biometric data. A tagging function analyzes the biometric data and tags the audiovisual content upon making a determination that at least a portion of the biometric data is representative of a user reaction to the audiovisual content. The AV content may be categorized in accordance with the tag.

## Description

### TECHNICAL FIELD OF THE INVENTION

The technology of the present disclosure relates generally to audiovisual content tagging and, more particularly, to a system and method for tagging audiovisual content based on biometric data.

### BACKGROUND

Mobile wireless electronic devices are becoming increasingly popular. For example, mobile telephones, portable media players and portable gaming devices are now in wide-spread use. In addition, the features associated with certain types of electronic devices have become increasingly diverse. To name a few examples, many electronic devices have cameras, text messaging capability, Internet browsing capability, electronic mail capability, video playback capability, audio playback capability, image display capability and handsfree headset interfaces.

Many electronic devices are capable of storing, downloading, and receiving streamed audiovisual (AV) content. The AV content may take many forms, examples of which include audio files (e.g., an MP3 file containing music) and video files (e.g., an MP4 file containing video).

The amount of available AV content is continually increasing. For example, cloud based AV services already provide access to millions of songs, videos, etc. AV content may be categorized based on characteristics such as genre, artist, album, rhythmic density, pitch density, etc. But as the amount of available AV content increases, it becomes harder and harder for a user to select desired AV content.

### SUMMARY

The present disclosure describes a device and method for tagging AV content based on biometric data. The use of biometrics for tagging data allows for AV content to be categorized based on the reaction of one or more users to the AV content. As a result, a user desiring to select a particular type of AV content may simply select AV content that has previously been determined to be suitable to the user's desires. The subject matter of the present disclosure makes it easier for a user to select desired AV content.

According to one aspect of the disclosure, a method of tagging audiovisual content based on biometric data includes: receiving biometric data based on physical movement of a user in response to reproduction of the audiovisual content; and outputting the biometric data for use in determining whether the audiovisual content is to be tagged.

In one embodiment, the method further includes reproducing audiovisual content on at least one of a speaker or a display.

In another embodiment, the biometric data is received from one or more sensors of a headset.

In another embodiment, the method further includes outputting additional data for use in determining whether the audiovisual content is to be tagged.

In another embodiment, the additional data is a geographic location.

In another embodiment, the method further includes: requesting the audiovisual content from a network-based cloud computing service; and outputting the biometric data to the network-based cloud computing service.

According to another aspect of the disclosure, a method of tagging audiovisual content based on biometric data includes: receiving biometric data based on physical movement of a user in response to reproduction of the audiovisual content; analyzing the biometric data; and tagging the audiovisual content upon a determination that at least a portion of the biometric data is representative of a user reaction to the audiovisual content.

In one embodiment, the method further includes reproducing audiovisual content on at least one of a speaker or a display.

In another embodiment, the biometric data is received from one or more sensors of a headset.

In another embodiment, the method further includes analyzing the biometric data in combination with additional data based on a characteristic of the user associated with the audiovisual content.

In another embodiment, the additional data is geographic location.

In another embodiment, the method further includes: requesting the audiovisual content from a network-based cloud computing service; and outputting a tagging result to the network-based cloud computing service that indicates the determination that at least a portion of the biometric data is representative of a user reaction to the audiovisual content.

In another embodiment, the method further includes categorizing the audiovisual content based on the tag.

According to another aspect of the disclosure, a method of tagging audiovisual content based on biometric data includes: tagging the audiovisual content upon a determination that at least a portion of biometric data based on physical movement of a user in response to reproduction of the audiovisual content is representative of a user reaction to the audiovisual content; and categorizing the audiovisual content based on the tag.

In one embodiment, the method further includes receiving a tagging result that indicates the determination that the at least a portion of biometric data based on physical movement of a user in response to reproduction of the audiovisual content is representative of a user reaction to the audiovisual content.

In another embodiment, the method further includes receiving biometric data based on physical movement of a user in response to reproduction of the audiovisual content.

In another embodiment, the method further includes analyzing the biometric data.

In another embodiment, the method further includes analyzing the biometric data in combination with additional data based on a characteristic of the user associated with the audiovisual content.

In another embodiment, the AV content is part of a network-based cloud computing service.

In another embodiment, the method further includes: receiving a request for audiovisual content; and outputting the audiovisual content in response to the request for audiovisual content.

These and further features will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

### BRIEF DESCRIPTION OF THE DRAWINGS

FIG. 1 is a schematic view of a mobile telephone as an exemplary electronic device that includes a biometric data function in accordance with the present disclosure;
FIG. 2 is a schematic block diagram of the electronic device of FIG. 1;
FIG. 3 is a schematic diagram of a communications system in which the electronic device of FIG. 1 may operate;
FIG. 4 is a schematic diagram of a biometric data sensing headset coupled to the electronic device of FIG. 1;
FIG. 5 is a flow diagram representing an exemplary method of tagging AV content in accordance with the present disclosure;
FIG. 6 is a flow diagram representing an exemplary method of tagging AV content in accordance with the present disclosure;

### DETAILED DESCRIPTION OF EMBODIMENTS

In the description that follows, like components have been given the same reference numerals, regardless of whether they are shown in different embodiments. To illustrate an embodiment(s) of the present invention in a clear and concise manner, the drawings may not necessarily be to scale and certain features may be shown in somewhat schematic form. Features that are described and/or illustrated with respect to one embodiment may be used in the same way or in a similar way in one or more other embodiments and/or in combination with or instead of the features of the other embodiments.

In the present document, embodiments are described primarily in the context of a portable radio communications device, such as the illustrated mobile telephone. It will be appreciated, however, that the exemplary context of a mobile telephone is not the only operational environment in which aspects of the disclosed systems and methods may be used. Therefore, the techniques described in this document may be applied to any type of appropriate electronic device, examples of which include a mobile telephone, a media player, a gaming device, a computer, a pager, a communicator, an electronic organizer, a personal digital assistant (PDA), etc.

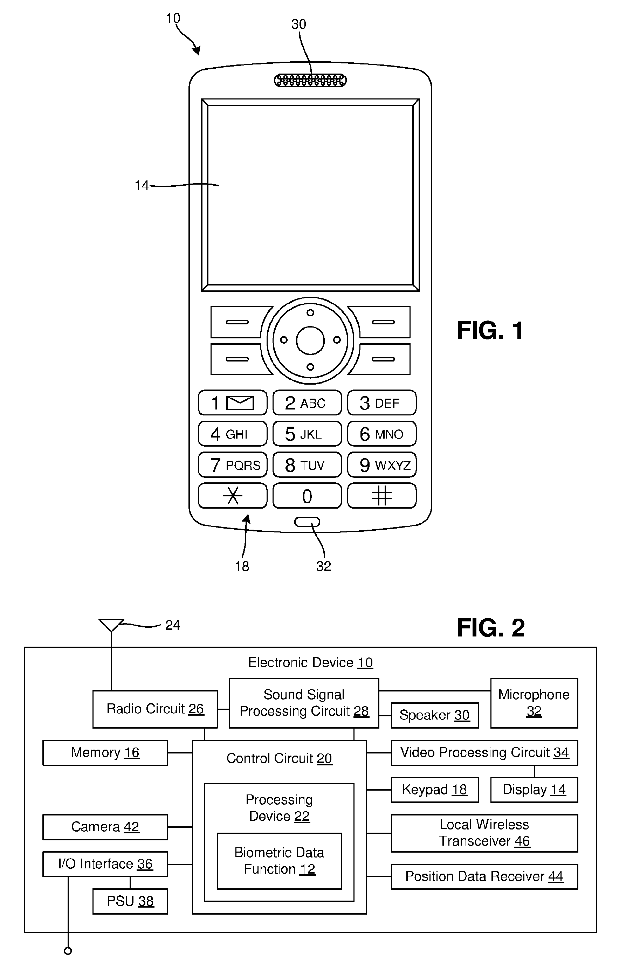

Referring initially to FIGs. 1 and 2, an electronic device 10 is shown. The electronic device 10 includes a biometric data function 12 that is configured to monitor, measure, record and/or forward biometric data sensed and output from one or more sensors of a headset during playback and/or display of AV content. The term "AV content" broadly refers to any type of audio-based and/or video-based subject matter and may be take the form of a stored file or streaming data. Stored files may include, for example, a music file, a video file, and so forth and may be stored locally by a memory of the electronic device or remotely, such as by a server. Streaming data may relate to a service that delivers audio and/or video for consumption by the electronic device and may include, for example mobile radio channels or mobile television channels.

The biometric data function 12 may be embodied as executable instructions (e.g., code) that is resident in and executed by the electronic device 10. In one embodiment, the biometric data function 12 may be one or more programs that are stored on a non-transient computer readable medium (e.g., an electronic, magnetic, or optical memory). The biometric data function 12 may be a stand-alone software application or form a part of a software application that carries out additional tasks related to the electronic device 10. Also, through the following description, exemplary techniques for sensing and measuring biometric data are described. It will be appreciated that through the description of the exemplary techniques, a description of steps that may be carried out in part by executing software is described. Although a computer program listing is omitted for the sake of brevity. However, the described steps may be considered a method that the corresponding device is configured to carry out. Also, while the biometric data function 12 is implemented in software in accordance with an embodiment, such functionality could also be carried out via dedicated hardware or firmware, or some combination of hardware, firmware and/or software. Additional details and operation of the biometric data function 12 will be described in greater detail below.

The electronic device of the illustrated embodiment is a mobile telephone and will be referred to as the electronic device 10. The electronic device 10 may include a display 14. The display 14 displays information to a user such as operating state, time, telephone numbers, contact information, various menus, etc., that enable the user to utilize the various features of the electronic device 10. The display 14 also may be used to visually display content received by the electronic device 10 and/or retrieved from a memory 16 (FIG. 2) of the electronic device 10. The display 14 may be used to present images, video and other graphics to the user, such as photographs, mobile television content, Internet pages, and video associated with games.

A keypad 18 provides for a variety of user input operations. For example, the keypad 18 may include alphanumeric keys for allowing entry of alphanumeric information (e.g., telephone numbers, phone lists, contact information, notes, text, etc.), special function keys (e.g., a call send and answer key, multimedia playback control keys, a camera shutter button, etc.), navigation and select keys or a pointing device, and so forth. Keys or key-like functionality also may be embodied as a touch screen associated with the display 14. Also, the display 14 and keypad 18 may be used in conjunction with one another to implement soft key functionality.

The electronic device 10 includes communications circuitry that enables the electronic device 10 to establish communications with another device. Communications may include calls, data transfers, and the like. Calls may take airy suitable form such as, but not limited to, voice calls and video calls. The calls may be carried out over a cellular circuit-switched network or may be in the form of a voice over Internet Protocol (VoIP) call that is established over a packet-switched capability of a cellular network or over an alternative packet-switched network (e.g., a network compatible with IEEE 802.11, which is commonly referred to as WiFi, or a network compatible with IEEE 802.16, which is commonly referred to as WiMAX), for example. Data transfers may include, but are not limited to, receiving streaming content (e.g., streaming audio, streaming video, etc.), receiving data feeds (e.g., pushed data, podcasts, really simple syndication (RSS) data feeds), downloading and/or uploading data (e.g., image files, video files, audio files, ring tones, Internet content, etc.), receiving or sending messages (e.g., text messages, instant messages, electronic mail messages, multimedia messages), and so forth. This data may be processed by the electronic device 10, including storing the data in the memory 16, executing applications to allow user interaction with the data, displaying video and/or image content associated with the data, outputting audio sounds associated with the data, and so forth.

In the exemplary embodiment, the communications circuitry may include an antenna 24 coupled to a radio circuit 26. The radio circuit 26 includes a radio frequency transmitter and receiver for transmitting and receiving signals via the antenna 24.

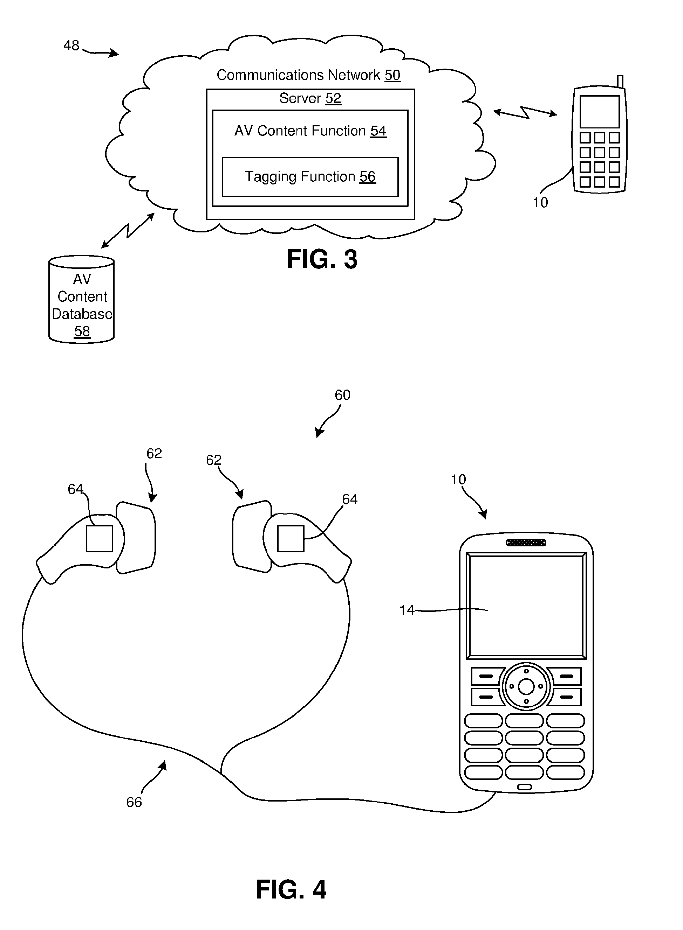

With additional reference to FIG. 3, the radio circuit 26 may be configured to operate in a mobile communications system 48. Radio circuit 26 types for interaction with a mobile radio network and/or broadcasting network include, but are not limited to, global system for mobile communications (GSM), code division multiple access (CDMA), wideband CDMA (WCDMA), general packet radio service (GPRS), long term evolution (LTE), WiFi, WiMAX, digital video broadcasting-liaiidheld (DVB-11), integrated services digital broadcasting (ISDB), high speed packet access (HSPA), etc., as well as advanced versions of these standards or any other appropriate standard. It will be appreciated that the electronic device 10 may be capable of communicating using more than one standard. Therefore, the antenna 24 and the radio circuit 26 may represent one or more than one radio transceiver.

The communications system 48 may include a communications network 50 having a server 52 (or servers) for managing calls placed by and destined to the electronic device 10, transmitting data to and receiving data from the electronic device 10 and carrying out any other support functions. In one embodiment, the server 52 may be configured to store and execute an AV content function 54 that provides AV content to the electronic device (e.g., a network-based cloud computing service).

The AV content function 54 may include a tagging function 56 that interacts with the biometric data function 12 of the electronic device 10. Details of the AV content function 54 and tagging function 56 will be described below in greater detail. In one embodiment, the AV content function 54 and tagging function 56 may be a program stored on a non-transitory computer readable medium. The AV content function 54 and the tagging function 56 may be a stand-alone software application or may form a part of a software application that carries out additional tasks related to the functions of the server 52. In one embodiment, the functions of the AV content function 54 and the tagging function 56 may be distributed among multiple servers, including one or more servers located outside the domain of the communications network 50. For instance, AV content may be provided on the server 52 or may be provided by an AV content database 58 hosted by an Internet server or a database server.

The server 52 communicates with the electronic device 10 via a transmission medium. The transmission medium may be any appropriate device or assembly, including, for example, a communications base station (e.g., a cellular service tower, or "cell" tower), a wireless access point, a satellite, etc. The communications network 50 may support the communications activity of multiple electronic devices 10 and other types of end user devices. As will be appreciated, the server 52 may be configured as a typical computer system used to carry out server functions and may include a processor configured to execute software containing logical instructions that embody the functions of the server 52 and a memory to store such software. In alternative arrangements, the electronic device 10 may wirelessly communicate directly with another electronic device 10 (e.g., another mobile telephone or a computer) through a local network or without an intervening network.

The electronic device 10 may include a primary control circuit 20 that is configured to carry out overall control of the functions and operations of the electronic device 10. The control circuit 20 may include a processing device 22, such as a central processing unit (CPU), microcontroller or microprocessor. The processing device 22 executes code stored in a memory (not shown) within the control circuit 20 and/or in a separate memory, such as the memory 16, in order to carry out operation of the electronic device 10. For instance, the memory within the control circuit 20 and/or the memory 16 may store executable code that embodies the biometric data function 12 and the processing device 22 may execute that code so that the control circuit 20 is configured to implement the functions of the biometric data function 12. The memory 20 may be, for example, one or more of a buffer, a flash memory, a hard drive, a removable media, a volatile memory, a non-volatile memory, a random access memory (RAM), or other suitable device. In a typical arrangement, the memory 16 may include a non-volatile memory for long term data storage and a volatile memory that functions as system memory for the control circuit 20. The memory 16 may exchange data with the control circuit 20 over a data bus. Accompanying control lines and an address bus between the memory 16 and the control circuit 20 also may be present.

The electronic device 10 further includes a sound signal processing circuit 28 for processing audio signals transmitted by and received from the radio circuit 26. Coupled to the sound signal processing circuit 28 are a speaker 30 and a microphone 32 that enable a user to listen and speak via the electronic device 10. The radio circuit 26 and sound signal processing circuit 28 are each coupled to the control circuit 20 so as to carry out overall operation. Audio data may be passed from the control circuit 20 to the sound signal processing circuit 28 for playback to the user. The audio data may include, for example, audio data from an audio file stored by the memory 16 and retrieved by the control circuit 20, or received audio data such as in the form of voice communications or streaming audio data from the AV content function 54. The sound signal processing circuit 28 may include any appropriate buffers, decoders, encoders, amplifiers and so forth.

The display 14 may be coupled to the control circuit 20 by a video processing circuit 34 that converts video data to a video signal used to drive the display 14. The video processing circuit 34 may include any appropriate buffers, decoders, video data processors and so forth. The video data may be generated by the control circuit 20, retrieved from a video file that is stored in the memory 16, derived from an incoming video data stream that is received by the radio circuit 26 (e.g., from the AV content function 54) or obtained by any other suitable method.

The electronic device 10 may further include one or more input/output (I/O) interface(s) 36. The I/O interface(s) 36 may be in the form of typical mobile telephone I/O interfaces and may include one or more electrical connectors. The I/O interfaces 36 may form one or more data ports for connecting the electronic device 10 to another device (e.g., a computer) or an accessory (e.g., a headset) via a cable. Further, operating power may be received over the I/O interface(s) 36 and power to charge a battery of a power supply unit (PSU) 38 within the electronic device 10 may be received over the I/O interface(s) 36. The PSU 38 may supply power to operate the electronic device 10 in the absence of an external power source.

The electronic device 10 also may include various other components. A camera 42 may be present for taking digital pictures and/or movies. Image and/or video files corresponding to the pictures and/or movies may be stored in the memory 16. A position data receiver 44, such as a global positioning system (GPS) receiver, Galileo satellite system receiver or the like, may be involved in determining the location of the electronic device 10. A local transceiver 46, such as an infrared transceiver and/or an RF transceiver (e.g., a Bluetooth chipset) may be used to establish communication with a nearby device, such as an accessory (e.g., a headset), another mobile radio terminal, a computer or another device.

As mentioned above, the biometric data function 12 of the electronic device 10 is configured to monitor, measure, record and/or forward biometric data sensed from a headset during playback and/or display of AV content. With additional reference to FIG. 4, a headset 60 including one or more speakers 62 and one or more sensors 64 may be coupled to the electronic device 10. As illustrated, the headset 60 may be physically coupled to the electronic device 10 via a cable 66 (e.g., to the I/O interface 44). In another embodiment, the headset 60 may be wirelessly coupled to the electronic device 10 (e.g., to the local transceiver 54). The headset 60 is illustrated as a pair of ear buds. But it is to be understood that the headset may instead be embodied as any suitable type of headset (e.g., headphones, canalphones, personal handsfree (PHF) device, etc.). The particular design of the headset 10 is not germane to the invention in its broadest sense.

The one or more sensors 64 are configured to sense biometric data of a user during reproduction of AV content. For example, biometric data of a user may be sensed during reproduction of audio or video. As used herein, "biometric data" is data of any physical movement or expression of a user in response to AV content. For example, the biometric data may be representative of a user reaction to audio reproduced by the one or more speakers 62 and/or video reproduced by the display 14. Any suitable sensors may be utilized for measuring such biometric data. For example, one or more accelerometers may be used for detecting head movement (e.g., head nodding, head banging, etc.). In another embodiment, one or more in-ear sensors may be used to detect if a user smiles or laughs (e.g., by monitoring and detecting muscle movement of the user). In another embodiment, a pair of sensors 64 may be used for detecting changes in the spatial orientation of the head of the user (e.g., if a user turns, tilts, or rotates their head).

Biometric data that is sensed and output by the one or more sensors 64 is monitored by the biometric data function 12. The biometric data function 12 may monitor, measure, record and/or forward biometric data during the entire duration of the AV content playback or during one or more portions of the AV content playback. The biometric data may be time stamped or and/or associated with the AV content for purposes of identifying particular biometric data with a particular item of AV content. The biometric data may be temporarily stored in the memory 16 of the electronic device 10.

The biometric data may be transmitted via the communications network 50 to the AV content function 54. Transmission of the biometric data may occur during or at a time after reproduction of the AV content. A tagging function 56 of the AV content function 54 is configured to analyze the transmitted biometric data to determine if at least a portion of the biometric data is representative of an identifiable user reaction to the AV content. For example, an analysis may be performed to determine if the user has responded to the AV content in a particular way (e.g., happiness, excitement, etc.) or if the user engaged in a particular activity during reproduction of the AV content (e.g., head nodding, head banging, dancing, exercising, etc.). The analysis may be performed and a determination made by any suitable process. For example, the biometric data may be analyzed based on such factors as repetition of a characteristic of the data, magnitude of a characteristic of the data, spatial orientation of the sensors (and head of a user), relation of a characteristic of the data to a characteristic of the AV content (e.g., tempo), etc. The analysis performed by the tagging function 56 may differentiate those identifiable portions of the biometric data from those portions that are not. This analysis may be performed during reproduction of the AV content or at a later time.

The tagging function 56 is further configured to tag AV content upon a determination that at least a portion of the biometric data is representative of an identifiable user reaction to the AV content. The tag associates the AV content with the identified user reaction and may categorize the AV content accordingly. For example, if the tagging function 56 determines that a user was head banging during the reproduction of a song, the tagging function will tag that song as a song that makes people head bang. The tagged song may be categorized with songs that yield the same or similar user reaction.

The AV content may be tagged and categorized for a variety of purposes. In one embodiment, AV content may be tagged for categorizing the AV content for subsequent reproduction, either in connection with the same user or a different user. The AV content may be presented and/or recommended to a user based on the categorization. As an example, a network-based (e.g., "cloud computing") service may categorize a song or video based on a pattern identified by the number of users who have reacted to the song or video in a particular manner. As the number of user reactions for particular AV content increases, the categorization of that AV content may become more comprehensive. For example, a song or video may be categorized based on a percentage of users who reacted in a particular manner. The confidence in categorizing the song or video in such a manner also increases, as possible error associated with the analysis of the biometric data decreases. A user may subsequently request to listen to one or more songs or play one or more videos that are associated with a particular category. A user may select from such exemplary categories as "songs that make people smile", "videos that make people smile", "songs that are good for head banging", "exercising songs", etc. Accordingly, the user may select a category of AV content that statistically has the same or similar effect on users as that user desires. In another example, a network-based cloud computing service may categorize AV content for a particular user. The user may select a category of AV content that have previously had a desired effect on that user.

Tagged and categorized AV content may also be presented to the user in the form of a recommendation. For example, if it is determined that a user experienced a particular reaction to a given AV content (e.g., a song by Led Zeppelin), additional AV content may be recommended to the user that have been similarly categorized (e.g., users who head banged to Led Zeppelin also head banged to Aerosmith).

In another embodiment, the AV content may be tagged and categorized for identifying AV content that a user may wish to download and/or purchase. For example, if the tagging function 56 determines that a user has had a positive reaction to AV content (e.g., smiling, head banging, etc.), the tagging function 56 may cause the AV content function 54 to send a message to the electronic device prompting the user as to whether the user desires to download and/or purchase the AV content. Of course, such downloading and/or purchasing may proceed automatically without prompting the user.

In another embodiment, the AV content may be tagged and categorized for market research. For example, the analysis results from the tagging function may serve as a market test pool for a new song or movie trailer.

The tagging of AV content has been described thus far in the context of measuring and analyzing biometric data of the sensors 64 of the headset 60. However, in other embodiments, the biometric data may be monitored, measured, recorded, forwarded and/or analyzed in combination with data from one or more additional sensors. For example, an accelerometer in the electronic device 10 or headset 60 may function as a step counter. In another embodiment, positional information received from position data receiver 44 (e.g., a GPS) may be combined with the sensed biometric data and analyzed to determine the geographic location in which a user reacted to the AV content in a particular manner. AV content may be categorized based on geographic location. For example, an analysis may determine that AV content has been reproduced at a gym while exercising. The AV content may be categorized such that a user who frequents the gym may select "exercise songs" at that location. In yet another embodiment, profile information of a user (e.g., age, sex, interests, etc.) may be analyzed in combination with the biometric data. For example, multiple analyses may determine that users in a particular age group tend to smile in response to a particular song.

Furthermore, while the tagging function 56 has been described above as a part of the AV content function 54, it is contemplated that the tagging function 56 may be included on the electronic device. The tagging function 56 may analyze the biometric data and tag AV content as part of the operation of the electronic device 10. In one embodiment, a tagging result may be transmitted to the AV content function 54. In another embodiment, the tagging result may be used in connection with AV content function (e.g., a media player) on the electronic device 10. Of course, the tagging function 56 may be on the server but may function independent from the AV content function 54.

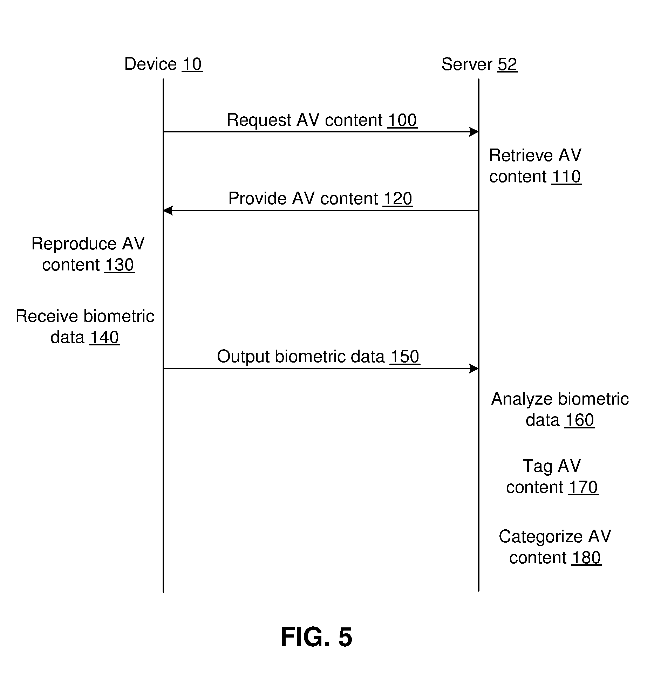

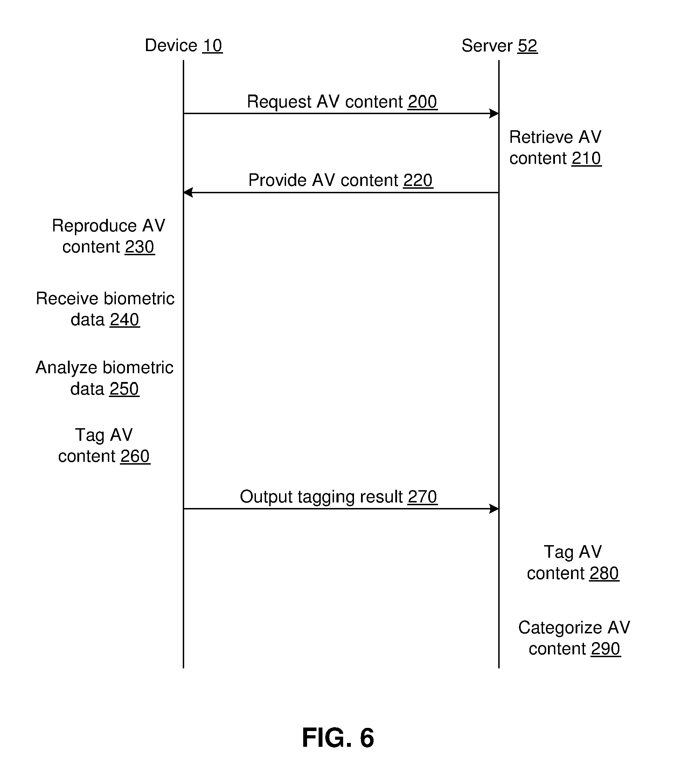

With additional reference to FIGs. 5 and 6, illustrated are logical operations to implement an exemplary method of tagging AV content based on biometric data. The exemplary method may be carried out by executing an embodiment of the biometric data function 12 and/or tagging function 56, for example. Although FIGs. 5 and 6 show a specific order of logical operations, the order thereof may be changed relative to the order shown. Also, two or more logical operations shown in succession may be executed concurrently or with partial concurrence. Certain logical operations also may be omitted.

Referring specifically to FIG. 5, the logical flow may begin at 100 where the electronic device 10 requests AV content. The request is received by the server 52 (e.g., by the AV content function 54), and the AV content is retrieved at 110 and is provided to the electronic device at 120. While AV content is described as being provided upon a request from the electronic device 10, it is contemplated that in other embodiments AV content may be forwarded to the electronic device without a request, or that AV content may already be stored on the electronic device 10. The electronic device reproduces the AV content at 130 and receives biometric data based on physical movement of a user in response to reproduction of the AV content at 140. As described above, the AV content may be reproduced on one or more speakers and/or a display, and the biometric data may be received from one or more sensors of a headset. Additional data based on a characteristic of the user may also be received by the electronic device 10. The biometric data and any additional data may be monitored, measured, recorded and/or forwarded by the biometric data function 12 of the electronic device 10. In the embodiment of FIG. 5, the biometric data (and any additional data) is output at 150 and is received by the server 52. The data is analyzed by the tagging function 56 at 160 and is tagged by the tagging function 56 at 170 upon a determination that at least a portion of the biometric data is representative of a user reaction to the audiovisual content. The AV content is categorized based on the tag at 180.

FIG. 6 illustrates an embodiment wherein the tagging function 56 is located on the electronic device 10. Similar to the embodiment of FIG. 5, the electronic device 10 0 requests AV content at 200. The request is received by the server 52 (e.g., by the AV content function 54), and the AV content is retrieved at 210 and is provided to the electronic device at 220. The electronic device reproduces the AV content at 230 and receives biometric data based on physical movement of a user in response to reproduction of the AV content at 240. The biometric data (and any additional data) is analyzed by the tagging function 56 at 250 and is tagged by the tagging function 56 at 260 upon a determination that at least a portion of the biometric data is representative of a user reaction to the audiovisual content. A tagging result that indicates the determination that at least a portion of the biometric data is representative of a user reaction to the audiovisual content is output at 270 and is received by the server 52. The AV content may be tagged at 280 and categorized based on the tag at 290.

Although certain embodiments have been shown and described, it is understood that equivalents and modifications falling within the scope of the appended claims will occur to others who are skilled in the art upon the reading and understanding of this specification.

## Claims

1. A method of tagging audiovisual content based on biometric data, including:
receiving biometric data based on physical movement of a user in response to reproduction of the audiovisual content; and
outputting the biometric data for use in determining whether the audiovisual content is to be tagged.

2. The method of claim 1, wherein the biometric data is received from one or more sensors of a headset.

3. The method of any one of claims 1 or 2, further including outputting additional data for use in determining whether the audiovisual content is to be tagged.

4. The method of claim 3, wherein the additional data is a geographic location.

5. The method of any one of claims 1-4, further including:
requesting the audiovisual content from a network-based cloud computing service; and
outputting the biometric data to the network-based cloud computing service.

6. A method of tagging audiovisual content based on biometric data, including:
receiving biometric data based on physical movement of a user in response to reproduction of the audiovisual content;
analyzing the biometric data; and
tagging the audiovisual content upon a determination that at least a portion of the biometric data is representative of a user reaction to the audiovisual content.

7. The method of claim 6, wherein the biometric data is received from one or more sensors of a headset.

8. The method of any one of claims 6 or 7, further including analyzing the biometric data in combination with additional data based on a characteristic of the user associated with the audiovisual content.

9. The method of claim 8, wherein the additional data is geographic location.

10. The method of any one of claims 6-9, further including:
requesting the audiovisual content from a network-based cloud computing service; and
outputting a tagging result to the network-based cloud computing service that indicates the determination that at least a portion of the biometric data is representative of a user reaction to the audiovisual content.

11. A method of tagging audiovisual content based on biometric data, including:
tagging the audiovisual content upon a determination that at least a portion of biometric data based on physical movement of a user in response to reproduction of the audiovisual content is representative of a user reaction to the audiovisual content; and
categorizing the audiovisual content based on the tag.

12. The method of claim 11, further including receiving a tagging result that indicates the determination that the at least a portion of biometric data based on physical movement of a user in response to reproduction of the audiovisual content is representative of a user reaction to the audiovisual content.

13. The method of any one of claims 11 or 12, further including receiving biometric data based on physical movement of a user in response to reproduction of the audiovisual content.

14. The method of claim 13, further including analyzing the biometric data to make the determination.

15. The method of any one of claims 13 or 14, further including analyzing the biometric data in combination with additional data based on a characteristic of the user associated with the audiovisual content to make the determination.
